Europäisches Patentamt

European Patent Office

Office européen des brevets

(19)

(11) Veröffentlichungsnummer: **0 133 569**

A2

(12) **EUROPÄISCHE PATENTANMELDUNG**

(21) Anmeldenummer: **84109366.9**

(22) Anmeldetag: **07.08.84**

(51) Int. Cl.⁴: **G 06 F 11/10**
**H 04 Q 3/54**

(30) Priorität: **10.08.83 DE 3328893**

(43) Veröffentlichungstag der Anmeldung:
**27.02.85 Patentblatt 85/9**

(84) Benannte Vertragsstaaten:
**AT CH DE FR GB IT LI NL SE**

(71) Anmelder: **Siemens Aktiengesellschaft**
**Berlin und München Wittelsbacherplatz 2**
**D-8000 München 2(DE)**

(72) Erfinder: **Bronold, Josef, Dipl.-Ing.**
**Luitpoldstrasse 14**
**D-8034 Germering(DE)**

(54) Schaltungsanordnung für Fernmeldeanlagen, insbesondere Fernsprechvermittlungsanlagen, mit Datensicherung durch Paritätsbits.

(57) Dynamischer Speicher (T) ist über Pufferspeicher (BU) an Datenbus (DA) angeschlossen. Ein zur Überwachung fehlerfreier Speicherung vorgesehener Paritätsauswerter (PA) ist ebenfalls an Datenbus (DA) angeschlossen, liefert bei Speicherung von über den Datenbus (DA) eintreffenden Informationen erstes Paritätsbit an Speicher (T) und bildet bei Abgabe gespeicherter Informationen und Aussendung derselben über den Datenbus (DA) zweites Paritätsbit, das der Paritätsauswerter (PA) mit erstem Paritätsbit vergleicht.

EP 0 133 569 A2

0133569

SIEMENS AKTIENGESELLSCHAFT          Unser Zeichen
Berlin und München                  VPA
                                    83 P 1 5 6 7 E

Schaltungsanordnung für Fernmeldeanlagen, insbesondere
Fernsprechvermittlungsanlagen, mit Datensicherung durch
Paritätsbits

Die Erfindung betrifft eineSchaltungsanordnung für Fernmeldeanlagen, insbesondere Fernsprechanlagen, in welchen über einen Datenbus eintreffende, aus mehreren Bit bestehende Informationen, insbesondere von einem Byte, zusammen mit einem Schreibbefehl über einen einer Zwischenspeicherung jeweils nur einer Information dienenden ersten Pufferspeicher einem einer Speicherung von zugleich mehreren Informationen dienenden Speicherwerk mit insbesondere dynamischen Speicherteil zugeführt werden, und in welchen dem Speicherwerk mittels eines Lesebefehls entnommenen und dabei nur zeitlich begrenzt von dem Speicherwerk angebotenen Informationen über einen zweiten Pufferspeicher auf den Datenbus bis zum Ende des Lesebefehls ausgesendet werden, und in welchen bei Speicherung der eintreffenden Informationen mittels eines Paritätsauswerters jeweils ein Paritätsbit pro Information gebildet und zusammen mit der jeweiligen Information gespeichert wird und bei Ausgabe jeweils einer Information aus dem Speicherwerk von dieser erneut ein Paritätsbit pro Information abgeleitet und mit dem gespeicherten Paritätsbit verglichen wird.

In Schaltungsanordnungen dieser als bekannt vorausgesetzten Art ist in bisherigen Fällen vorgesehen worden,

Hes 1 Kel /9.8.83

einen Paritätsauswerter zwischen dem ersten Pufferspeicher und dem Speicherwerk an einen diese beiden
miteinander verbindenden speicherinternen Datenbus mit
anzuschließen. Ist den über den weiter obengenannten
Datenbus zum Speicherwerk über den Pufferspeicher übertragenen Informationen je ein Paritätsbit mitgegeben,
so kann die Richtigkeit nicht nur der Informationsübertragung über den eingangs genannten Datenbus
sondern auch der Zwischenspeicherung im ersten
Pufferspeicher mitüberwacht werden.

Es zeigt sich jedoch, daß die Überwachung der Richtigkeit der Speicherung wesentlich mehr Bedeutung
hat, als eine Überwachtung der Richtigkeit der Übertragung der Informationen über den erstgenannten
Datenbus.

Ein Problem in Schaltungsanordnungen der eingangs angegebenen Art besteht in dem  Gesamt-Zeitaufwand
für die in großer Anzahl durchzuführenden Speichervorgänge. Hierbei addiert sich pro Speicherungsvorgang zu der Zeit der Zwischenspeicherung im ersten
Pufferspeicher der für die anschließende Paritätsauswertung erforderliche Zeitaufwand. Da das Ergebnis
der Paritätsauswertung ebenfalls gespeichert werden
muß, und zwar in Zuordnung zu der jeweiligen Information, schiebt sich zwischen die Zeit der Zwischenspeicherung im ersten Pufferspeicher und die Aufnahme
der betreffenden Information im Speicherwerk der
Zeitaufwand für die Paritätsauswertung. Für die Erfindung besteht deshalb u.a. dieAufgabe, in einer
Schaltungsanordnung der eingangs angegebenen Art die
Schaltvorgänge von der Informationsübertragung über

den eingangs genannten D$_a$tenbus bis zur fertigen Speicherung im Speicherwerk insgesamt zu beschleunigen.

Ein weiterer Zusammenhang ist für die Erfindung wesentlich. Wie eingangs angegeben, geht die Erfindung davon aus, daß die dem Speicherwerk mittels eines Lesebefehls entnommenen Informationen jeweils nur zeitlich begrenzt von dem Speicherwerk angeboten werden, weswegen der zweite Pufferspeicher vorgesehen ist, über den jeweils jede dieser Informationen bis zum Ende des jeweiligen Lesebefehls ausgesendet werden. Hierin liegt ein Zeitproblem für den Paritätsauswerter, der bei einem Empfang einer Information vom Speicherwerk zusätzlich noch eine Zeitmarkierung braucht, durch die dem Paritätsauswerter angegeben wird, wann die vom Speicherwerk abgegebene Information als gültig abzunehmen ist. Für die Erfindung besteht deshalb außerdem die Aufgabe, die Erfassung von Informationen, die vom Speicherwerk abgegeben und über den eingangs genannten Datenbus zur Aussendung gebracht werden, für den Paritätsauswerter zu vereinfachen. Die Erfindung löst die gestellten Aufgaben dadurch, daß der Paritätsauswerter parallel zu den Pufferspeichern am Datenbus angeschlossen ist und über diesen sowohl eintreffende als auch ausgesendete Informationen empfängt, und daß der Paritätsauswerter bei Aussendung einer Information das gespeicherte und von der Aussendung ausgenommene Paritätsbit ebenfalls über den zweiten Pufferspeicher erhält.

Durch Anschluß des Paritätsauswerters an den Datenbus werden durch den Paritätsauswerter sowohl über den Datenbus eintreffende Informationen als auch über

0133569

83 P 1567 E

ihn wieder zur Aussendung gebrachte Informationen erfaßt. Die Aufnahme einer über den Datenbus eintreffenden Information einerseits im Pufferspeicher und andererseits durch den Paritätsauswerter beginnt gleichzeitig. Der Paritätsauswerter kann dadurch sein im Speicherwerk mit der jeweils eingetroffenen Information zusätzlich zu speichernde Paritätsbit zu früherem Zeitpunkt bereitstellen. Bei der Abgabe von Informationen aus dem Speicherwerk über den zweiten Pufferspeicher und den Datenbus empfängt der Paritätsauswerter die jeweilige Information über den zweiten Pufferspeicher, der die bis zum Ende des jeweiligen Lesebefehls auf den Datenbus abgibt. Damit werden die Zeitbedingungen für den Paritätsauswerter bezüglich der Aufnahme von von im Speicherwerk über den Datenbus abgegebenen Informationen völlig entschärft. Als Zeitmarkierung für den Paritätsauswerter kann das Ende des jeweiligen Lesebefehls verwendet werden; es ist also nicht noch eine besondere Zeitmarkierung erforderlich.

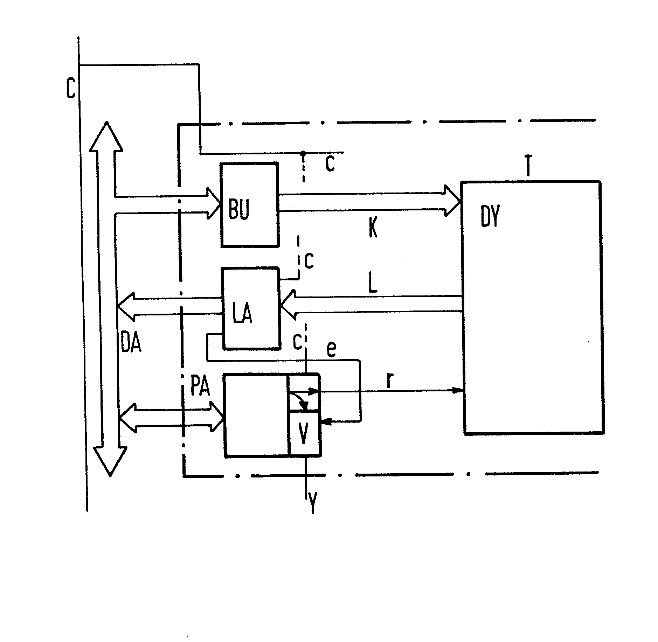

In der Zeichnung ist ein Ausführungsbeispiel der Erfindung nur in wesentlich zu ihrem Verständnis beitragenden Bestandteilen dargestellt. Die Erfindung ist jedoch keineswegs hierauf beschränkt.

An einen Datenbus DA, der mit einer informationsverarbeitenden Schalteinrichtung verbunden sein möge, ist eine Mehrzahl von Speicherwerken angeschlossen, von denen nur das eine Speicherwerk T dargestellt ist. Über den Datenbus können Informationen von der genannten informationsverarbeitenden Schalteinrichtung eintreffen, oder es können solche auch an diese abgegeben werden. Diese Vorgänge werden von der informationsverarbeitenden Schalteinrichtung gesteuert. Die Informationen haben ein einheitliches Datenformat. Jede Information besteht aus insgesamt 8 bit, deshalb aus einem Byte. Eine Information kann auch aus einem halben Byte oder mehreren Byte bestehen. Die Übertragung der einzelnen Bits einer Information kann im Raumvielfach oder im Zeitvielfach oder gemischt stattfinden.

Die Informationen werden von der informationsverarbeitenden Schalteinrichtung an jedes einzelne der Speicherwerke zusammen mit einem Schreibbefehl abgegeben bzw. mit einem Lesebefehl von jedem einzelnen der Speicherwerke abgerufen. Dieser Schreibbefehl bzw. Lesebefehl bezeichnet nicht nur diese beiden unterschiedlichen Vorgänge, sondern jeweils auch das individuelle Speicherwerk, bei dem der jeweilige Schreibvorgang (Speicherung) oder Lesevorgang (Entnahme aus dem Speicherwerk) durchgeführt werden soll. Schreibbefehl und Lesebefehl sowie Adressierung des individuellen Speicherwerks erfolgen über eine gemeinsame Befehlsleitung C, die als jedem Speicherwerk individuelle Befehlsleitung c in dasselbe hinein verlängert ist.

Eine zu speichernde Information wird zunächst einem ersten Pufferspeicher BU zugeführt. Durch den Schreibbefehl wird gekennzeichnet, daß das betreffende Speicherwerk, z.B. T, gemeint ist, und daß es eine Information vom Datenbus DA aufzunehmen hat. Dadurch wird der Pufferspeicher BU veranlaßt, die am Datenbus anstehende Information aufzunehmen.

Der Schreibbefehl gelangt über die Befehlsleitung c

0133569

83 P 1 5 6 7 E

außerdem zu einem Paritätsauswerter PA. Dieser
wird gleichzeitig mit dem Pufferspeicher BU veranlaßt, die über den Datenbus angebotene Information aufzunehmen. Der Paritätsauswerter bildet
in bekannter Weise aus den einzelnen Bestandteilen
der aufgenommenen Information die Quersumme und
gibt ein entsprechendes Paritätsbit über die Leitung r
zum Speicherwerk DY hin ab. Dieses Paritätsbit hat
immer dann den Wert 1, wenn die genannte Quersumme
gerade ist. Ist sie ungerade, so hat das Paritätsbit den Wert 0. Zusammen mit der genannten Quersumme
ergibt sich also immer ein ungerader Wert, d.h.
bei Addition der Quersumme mit dem Paritätsbit.

Die im Pufferspeicher BU zwischengespeicherte
eingetroffene Information wird über den internen
Datenbus K zum dynamischen Speicherwerk DY weitergegeben. Hierin wird sie gemeinsam mit dem zugeordneten Paritätsbit in einem Speicherglied des
Speicherwerks gespeichert.

Bei dem Speicherwerk DY kann es sich um einen
FiFo-Speicher handeln, bei dem also die Informationen in der gleichen Reihenfolge, wie sie
gespeichert werden, auch wieder aus ihm entnommen
werden. Bei diesem Speicherwerk kann es sich jedoch
auch um einen Speicher handeln, bei dem die einzelnen
Informationen zusammen mit Adressen oder mit Hilfe
von Adressierung gespeichert werden. Dadurch ist
es möglich, bei einer Entnahme dieser Informationen
einzeln aus dem Speicherwerk gezielt bestimmte
Speicherglieder des Speicherwerks anzusteuern
und anhand der Adresse jeweils eine bestimmte unter der Gesamtheit der gespeicherten Informationen
dem Speicherwerk wieder zu entnehmen.

Mit Hilfe eines Lesebefehls werden Informationen
wieder aus dem Speicherwerk DY entnommen. Diese
Informationen gelangen über einen internen Datenweg L zu einem zweiten Pufferspeicher. Die vom
Speicherwerk aufgrund eines ihm übertragenen Lesebefehls angebotenen Informationen werden von dem
Speicherwerk jeweils nur zeitlich begrenzt angeboten. Deshalb werden sie zunächst dem zweiten Pufferspeicher LA übertragen und hierin zwischengespeichert.
Dieser Speicherinhalt umfaßt außer der jeweils entnommenen Information auch das zusammen mit ihr gespeicherte Paritätsbit. Während die Information aufgrund des Lesebefehls auf den Datenbus DA abgegeben
wird, verbleibt das zwischenzeitlich gespeicherte
Paritätsbit innerhalb der Speichereinheit T; es
gelangt über die Leitung e zum Paritätsauswerter PA.
Innerhalb des Paritätsauswerters gelangt das
zwischenzeitlich gespeicherte Paritätsbit zu einem
Vergleicher V. Der Paritätsauswerter empfängt
vom Datenbus die vom zweiten Pufferspeicher LA
auf den Datenbus DA abgegebene Information und
nimmt eine Paritätsauswertung vor. Das Ergebnis
dieser Paritätsauswertung führt der Paritätsauswerter PA intern ebenfalls dem Vergleicher V zu.
Stellt der Vergleicher Übereinstimmung fest, so
ergibt sich hieraus, daß der Vorgang der Speicherung
im Speicherwerk DY sowie der Entnahme der betreffenden Information aus dem Speicherwerk sowie der Vorgang
der Zwischenspeicherung im ersten Pufferspeicher BU sowie der Vorgang der Zwischenspeicherung im zweiten Pufferspeicher LA fehlerfrei verlaufen sind. Sind jedoch die genannten beiden Paritätsbits ungleich, was vom Vergleicher V erkannt wird, so gibt dieser über die Leitung Y ein Alarmsignal ab. Dadurch wird angezeigt, daß die verschiedenen Vorgänge der Speicherung und Zwischenspeicherung nicht fehlerfrei verlaufen sind.

Wie erläutert wurde, wird ein Lesebefehl über die Befehlsleitung c u.a. dem Paritätsauswerter PA zugeführt. Es ist vorgesehen, daß das Ende eines jeden Lesebefehls für den Paritätsauswerter PA bei Entnahme einer Information aus dem Speicherwerk DY das Signal dafür ist, daß die in Verbindung damit durchzuführende Paritätsauswertung stattfinden soll, sowie der Vergleich mit Hilfe des Vergleichers V.

Die Aussendung einer dem Speicherwerk DY entnommenen Information, die im zweiten Pufferspeicher LA zwischengespeichert wurde, erfolgt bis zum Ende des über die Befehlsleitung C/c übertragenen Lesebefehls. Hierzu ist auch der zweite Pufferspeicher mit der Befehlsleitung c verbunden.

In Abweichung von dem zuvor Beschriebenen kann auch vorgesehen werden, daß der Paritätsauswerter einerseits bei Speicherung von Informationen mit geradzahliger - bzw. ungeradzahliger - Quersumme und andererseits bei Aussendung von Informationen mit geradzahliger - bzw. ungeradzahliger - Quersumme ungleiche Paritätsbits in Abhängigkeit von dem Unterschied zwischen dem Vorgang des Eintreffens und dem Vorgang der Aussendung von Informationen abgibt, und daß ein Vergleich inhaltsgleicher Paritätsbits zur Bildung eines Alarmsignales über die Leitung Y führt und ein Vergleich inhaltsungleicher Paritätsbits zur Bildung einer Gutaussage oder zur Verhinderung der Bildung eines Alarmsignales. Hierzu reagiert der Paritätsauswerter PA also unterschiedlich einerseits bei Empfang eines Schreibbefehls und andererseits bei Empfang eines Lesebefehls. Das hat zur Wirkung, daß bei Speicherung einer Information einerseits und Entnahme derselben Information aus dem Speicherwerk andererseits vom Paritätsauswerter immer ungleiche Paritätsbits gebildet werden. In diesem Fall erkennt der Vergleicher also die Richtigkeit aller Speicherungsvorgänge immer daran, daß die betreffenden beiden Paritätsbits ungleich sind. Dadurch wird zusätzlich erreicht, daß auch der Paritätsauswerter PA immer einer Selbstüberwachung unterworfen ist.

<u>3</u> Patentanspruch
<u>1 Figur</u> .

0133569

83 P 1 5 6 7 E

Patentansprüche

1. Schaltungsanordnung für Fernmeldeanlagen, insbesondere Fernsprechvermittlungsanlagen, in welchen über einen Datenbus eintreffende, aus mehreren bit bestehende Informationen, insbesondere von einem Byte, zusammen mit einem Schreibbefehl über einen einer Zwischenspeicherung jeweils nur einer Information dienenden ersten Pufferspeicher einem einer Speicherung von zugleich mehreren Informationen dienenden Speicherwerk mit insbesondere dynamischen Speicherteil zugeführt werden, und in welchen dem Speicherwerk mittels eines Lesebefehls entnommenen und dabei nur zeitlich begrenzt von dem Speicherwerk angebotenen Informationen über einen zweiten Pufferspeicher auf den Datenbus bis zum Ende des Lesebefehls ausgesendet werden, und in welchen bei Speicherung der eintreffenden Informationen mittels eines Paritätsauswerters jeweils ein Paritätsbit pro Information gebildet und zusammen mit der jeweiligen Information gespeichert wird und bei Ausgabe jeweils einer Information aus dem Speicherwerk von dieser erneut ein Paritätsbit pro Information abgeleitet und mit dem gespeicherten Paritätsbit verglichen wird, dadurch gekennzeichnet, daß der Paritätsauswerter parallel zu den Pufferspeichern am Datenbus angeschlossen ist und über diesen sowohl eintreffende als auch ausgesendete Informationen empfängt, und daß der Paritätsauswerter bei Aussendung einer Information das gespeicherte und von der Aussendung ausgenommene Paritätsbit ebenfalls über den zweiten Pufferspeicher erhält.

2. Schaltungsanordnung nach Anspruch 1, dadurch gekennzeichnet, daß bei Aussendung einer Information der Zeitpunkt für die sie betreffende Paritätsauswertung, insbesondere auch für den Vergleich des dabei gewonnenen Paritätsbit mit dem gespeicherten Paritätsbit, durch das Ende des Lesebefehls gegeben ist.

3. Schaltungsanordnung nach Anspruch 1, dadurch gekennzeichnet, daß der Paritätsauswerter einerseits bei Speicherung von Informationen mit geradzahliger - bzw. ungeradzahliger - Quersumme und andererseits bei Aussendung von Informationen mit geradzahliger - bzw. ungeradzahliger - Quersumme ungleiche Paritätsbits in Abhängigkeit von dem Unterschied zwischen dem Vorgang des Eintreffens und dem Vorgang der Aussendung von Informationen abgibt, und daß ein Vergleich inhaltsgleicher Paritätsbits zur Bildung eines Alarmsignales führt und ein Vergleich inhaltsungleicher Paritätsbits zur Bildung einer Gutaussage oder zur Verhinderung der Bildung eines Alarmsignales.